# EUROPEAN PATENT SPECIFICATION

(11) **EP 1 393 423 B1**
(45) Date of publication and mention of the grant of the patent: **17.03.2010**
(21) Application number: 02771836.0
(22) Date of filing: 14.05.2002
(51) Int. Cl.: H02G 15/22, H02G 15/02, H01B 11/06, B29D 22/00

(54) **PROTECTIVE COVER**
SCHUTZABDECKUNG
REVETEMENT DE PROTECTION

(30) Priority: 18.05.2001 US 860423
(43) Date of publication of application: 03.03.2004
(73) Proprietor: JHRG, LLC, Spring Hope, North Carolina 27882 (US)
(72) Inventor: HOLLAND, John, E., Bailey, NC 27807 (US); HOLLAND, Connie, W., Bailey, NC 27807 (US)
(74) Representative: Bankes, Stephen Charles Digby
(86) International application number: PCT/US2002/015171
(87) International publication number: WO 2002/095891

(56) References cited:
- WO-A1-97/48940
- US-A- 4 737 402
- US-A- 4 891 256
- US-A- 5 070 597
- US-A- 5 300 337
- US-A- 5 395 682

## Description

The present invention relates to the field of protective coverings, and, more particularly to a protective cover for hoses and cables of the type that are periodically moved and dragged across abrasive surfaces such as concrete and asphalt, in environments such as airports and the like.

As the industrial complex in the United States and abroad has grown over the last century, so has the demand for reliable means for transporting electricity, communications signals, and fluid media. Early constructions of power lines and pipeline systems proliferated, but they have not been without attendant unreliability and lack of service durability. For example, overhead insulated power lines have been susceptible to wear and abrasion from trees. Sandpaper-type wrappings have been attempted to counter these effects. Windings of fibreglass and rubber have been applied to protect underwater-type cables and conduits from rocks, coral and seawater. Braided metal and plastic sheathings have been developed to protect certain types of cables and hoses; however, these have been bulky and too rigid for many applications. Narrow bands of rigid materials have been developed for reducing the friction between a hose and an abrasive surface by placing the bands at regular intervals along the length of a hose; however, exposure of the unbanded surface area of these hoses to the elements and to chemicals continues to be problematic.

In certain industries, such as the airline industry, fuel hoses and electrical cables, encased only in rubber or other soft insulating materials, must be pulled and dragged across abrasive surfaces, such as concrete and asphalt, to service aircraft. In many airports, the hose and/or cable must be moved over an abrasive surface many times during a single day. The surface may be wet or have gasoline or chemicals thereon. The war on conventional hoses causes frequent replacement to be necessary. Substantial annual costs to replace worn cables and hoses have thus been common. Further, constant exposure to the elements and to ultraviolet radiation accelerates the interval between replacements. Since these cables and hoses are produced to meet commercial federal industry safety standards, costs of $15 per foot, ($50 per metre) or more, are not uncommon. Yet, there had not heretofore been an effective, practical, solution to this problem.

US-A-5,300,337 discloses wraparound sleeves, framed by knitting, weaving or braiding, for the protection of cables, hoses and the like. The tubes are provided with closure means comprising multifilament, bulky yarn interlaced in the sleeving material and relatively along one of its marginal edges, with a hook-type fastening along the other marginal edge.

US-A-4,737,402 discloses composite articles such as helmets, bulletproof vests, armour plating and structural members, comprising a network of high strength fibers having a tensile modulus of at least 1442 g/Tex and a tenacity of at least 63 g/Tex. The individual fibers are coated with an elastromeric material and the coated fibers are provided with at least one additional rigid layer or a major surface.

The present invention is directed to a simple, yet effective, abrasion-resistant protective system for hoses, cables, and other conduits of the type used in high abrasion applications such as the airline industry.

The present invention consists in an abrasion-resistant, cut-resistant, and tear-resistant protective cover for cables or hoses used in environments in which the cables and hoses are subjected to abrasion, chemicals, or weather extremes, said protective cover comprising a sleeve to surround said cable or hose, said sleeve having open ends and being formed of an elongated sheet of a woven, single layer, lightweight fabric made substantially of high performance yarns formed primarily of long chain polyethylene fibers having a tensile modulus equal to or greater than 1350 g/Tex (150 g/denier) and a tenacity equal to or greater than 63 g/Tex (7 g/denier), the yarns having a denier of 400 to 1000, said fabric having a warp and fill density of 11.8 to 14.2 ends/cm (30 to 36 ends per inch), and the sleeve having bonded to the outside thereof as thermoplastic film of polyethylene and/or ethylene-vinyl acetate copolymer and wherein said fabric is resistant to petroleum-based products.

In its simplest construction, the present invention comprises a protective covering, or sleeve, having open ends to be fitted over substantially the entire surface area of a cable or hose. As used herein, "high-strength yarns" refers to the entire family of yarns that have a tensile modulus equal to or greater than 1350 g/Tex (150 g/denier) and a tenacity equal to or greater than 63 g/Tex (7 g/denier). Such yarns are formed from long chain polyethylene fibers. The preferred yarn for the fabric is available from suppliers, such as Allied Signal, under the tradename SPECTRA@. Fabrics woven or knitted from these yarns have a high level of tear-resistance, abrasion-resistance, cut-and-stab resistance, ultraviolet radiation resistance, and resistance to chemicals and low temperatures. These characteristics improve both the strength and durability of the fabric. In addition, fabric so formed is only about one third the weight of conventional fabrics like vinyl-coated nylons and polyesters.

In a preferred embodiment, the protective cover is constructed as a sleeve that may be easily and quickly installed over an existing cable or hose, and just as quickly and easily removed or replaced. Accordingly, the protective cover is initially formed a length of abrasion-resistant fabric with attaching elements along opposed edges. The length of fabric is dimensioned so that the width of the fabric sheet is slightly grater than the circumference of the cable or hose with which the sleeve is intended for use, and the length of the fabric sheet approximates the total length of cable or hose to be protected. The fabric is a woven single layer with a preferred weight of 169 to 27g/m² (5 to 8 ounces per square yard); however, the cover is not weight limited. The range of parameters of this single fabric layer is designed to provide a fabric that is extremely lightweight and flexible, while also providing sufficient strength and long-lasting durability to withstand the use and environment to which a cable and hose cover is exposed in the referenced applications.

While not required for abrasion-resistance, a lightweight coating or lamination is provided on the outer surface of the protective cover to enhance the penetration resistance of the fabric by fluids, chemicals, and particulate matter where such additional protection is desired. It has been found that a thermoplastic film or polyethylene or ethylene vinyl acetate suitably bonds to fabrics formed from high-strength yarns, including SPECTRA®.

Means for fastening the length of fabric and holding it in place may be affixed along the opposed longitudinal edges of the fabric length. An important advantage of this aspect is that the sleeve so formed may be easily installed or removed (in the case of replacement) from cables or hoses without the need for disconnecting or disassembling the hoses or cables from their installed applications. Thus, the protective cover of the present invention may be easily fitted over a hose or electrical cable that is presently in service without having to disrupt operations by uncoupling the hose or cable or removing the fittings therefrom. The fasteners preferred for this application are hook and loop strips that allow the sleeve to be completely closed along its entire length. Hook and loop fastening strips are most commonly available under the trademark VELCRO®. To ensure extra holding capability, either multiple strips may be used or wider strips may be affixed to the edges of the length of fabric. Alternatively, other fasteners such as snaps, ties, and the like could be used.

Another embodiment of the present invention is in the form of short lengths of protective coverlets constructed from the fabric described above. In applications where the entire cable or hose does not have to be covered, as in the case where abrasion alone is the primary concern, a series of spaced apart narrow coverlets, or protective bands, may be wrapped around the cable or hose at selected intervals and fastened as described above.

A further embodiment of the present invention is directed to an abrasion-resistant cable or hose construction in which a permanently affixed outer protective layer, formed substantially from high strength yarns. The outer layer may be either adhered to the hose or cable with adhesives or cement that are resistant to chemical attack, or the fabric may be imbedded or impregnated into the outer surface of the cable or hose during the manufacture thereof.

These and other aspects of the present invention will become apparent to those skilled in the art after a reading of the following description of the preferred embodiments when considered in conjunction with the drawings, wherein:
Figure 1 is a perspective view of a protective cover from a fabric of high-performance yarns;
Figure 2 is a perspective view of a protective cover with reclosable fasteners affixed along opposed longitudinal edges;
Figure 3 is a perspective view of the protective cover of Figure 1 or 2 with an optional end hood;
Figure 4 is a perspective view of spaced-apart protective coverlets constructed in accordance with the present invention;
Figure 5A is an end view of an abrasion-resistant cable having an outer layer of fabric formed from high-performance yarns; and
Figure 5B is an end view of an abrasion-resistant hose having an outer layer of fabric formed from high-performance yarns.

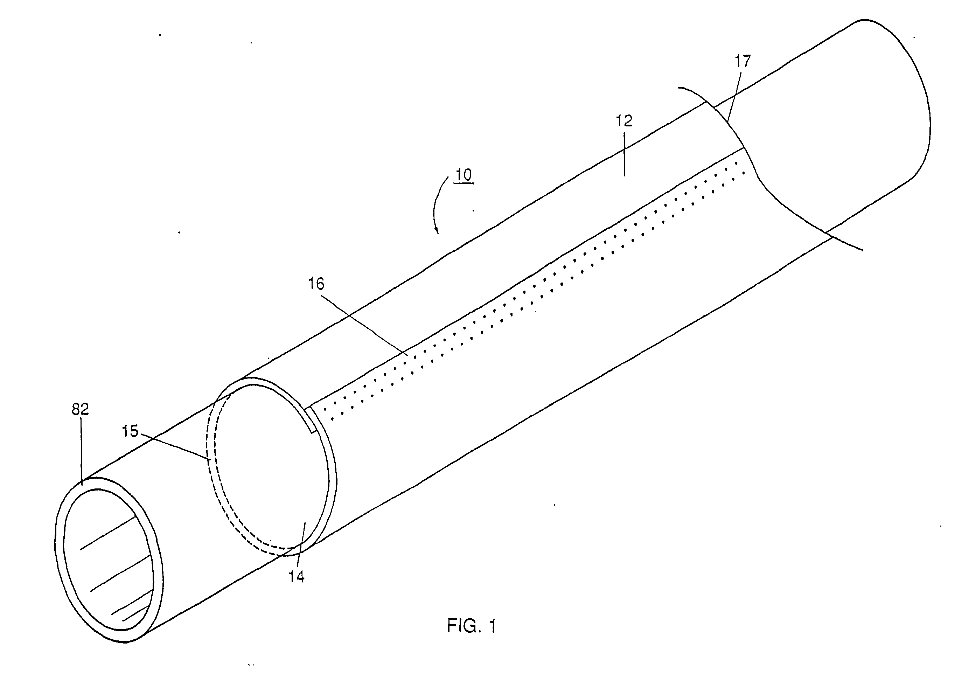

As shown in Figure 1, one aspect of the present invention is directed to a protective cover for cables and hoses of the type used in commercial applications, such as the airline industry. Shown generally as 10 in Figure 1, in its simplest form the protective cover comprises a sleeve having an outer surface 12, an inner surface 14, and open ends 15, 17. Protective cover 10 is formed from a singular length of woven fabric with a single layer that is sewn together along longitudinal edges to form a seam 16.

The fabric used to form the abrasion-resistant and cut-resistant protective cover is woven from high-strength yarns. As used herein, "high strength yarns" means yarns formed from fibers having a tensile modulus equal to or greater than 150 grams/denier and a tenacity equal to or grater than 7 grams/denier. In the preferred embodiment, the yarns used to form the woven sheet are formed from long chain polyethylene fibers available from suppliers, such as Allied Signal, under the trademark SPECTRA@. Other yarns may be included, for example those formed from aramids, such as KEVLAR® or liquid crystal polymers, such as VECTRAN®. Fabric so formed from SPECTRA@, for example, has a high level of tear-resistance, abrasion-resistance, cut-and-puncture-resistance, resistance to low temperatures, and resistance to chemicals such as aviation fuel and oils. It also retains its durability after prolonged exposure to ultraviolet radiation. Additionally, the fabric is only about 1/3 the weight of conventional fabrics like nylon and polyester.

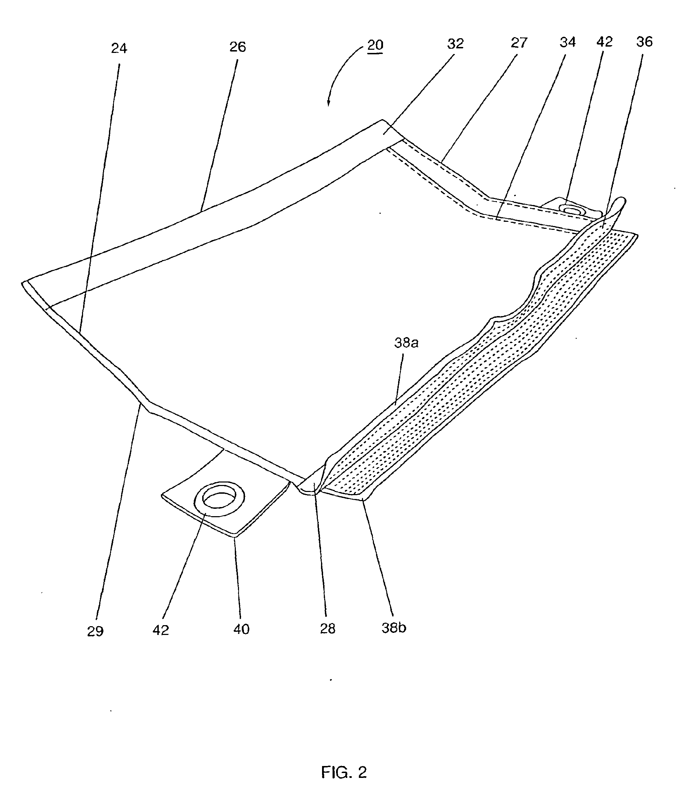

As shown in Figure 2, the preferred embodiment, protective cover 20 is constructed as a wrap. The wrap is formed as an elongated sheet having an outer surface 22 and an inner surface 24, opposed longitudinal edges 26, 28, and opposed ends 27, 29. The woven fabric sheet is a single layer with a preferred weight between about 5 and 8 ounces per square yard. Hems are sewn into the edges 26, 28 and ends 27, 29 to prevent ravelling thereof. The warp and fill yarns are desirably in the range of 44.4 to 111 Tex (400 to 1,000 denier) and the warp and fill picks are in the range of 11.8 to 14.2 yarns/cm (30 to 36 yarns/in) each. However, the range of possible Tex and picks per cm are not limited thereto. As those skilled in the art will appreciate, a lighter or heavier fabric having a more open or more closed weave may be selected to construct a protective cover for a specialized application. Likewise, the fabric need not be formed from a single yarn. For instance, in applications in which protective cover 20 may be subjected to tensile stresses in the horizontal axis that could create "creep", or stretching, the fabric may be formed with a blend of yarns comprising up to 30% KEVLAR® with the SPECTRA@ construction. That is, blended yarns formed from up to about 30% of such high-strength fibers, or in the alternative, up to about 30% of the yarn ends being formed entirely from high-strength filaments, would provide an acceptable combination. This blend of SPECTRA® and KEVLAR® has been found quite effective in reducing creep. Additionally, where cost is a key factor and susceptibility to wear less severe, small percentages of more conventional yearns such as polyester and nylon may be substituted. As would be expected, the resistance characteristics described hereinabove will be reduced in such constructions. As those skilled in the art will also appreciate, the fabric of the present invention may also be knitted or formed in other ways that are conventional and known in the textile arts.

To provide an additional level of wear resistance and to further enhance fluid or particulate penetration resistance of the fabric construction, a lightweight coating, or lamination 30, is applied on the outer surface 22. It has been found that a thermoplastic film of polyethylene or ethylene vinyl acetate suitably bonds to fabrics formed from high-performance yarns, including SPECTRA@. The process for applying lamination 30 is described in detail in US Patent Application Serial No. 08/957,431, incorporated by reference herein. While not required, lamination may also be applied to inner surface 24 as an additional measure of penetration resistance.

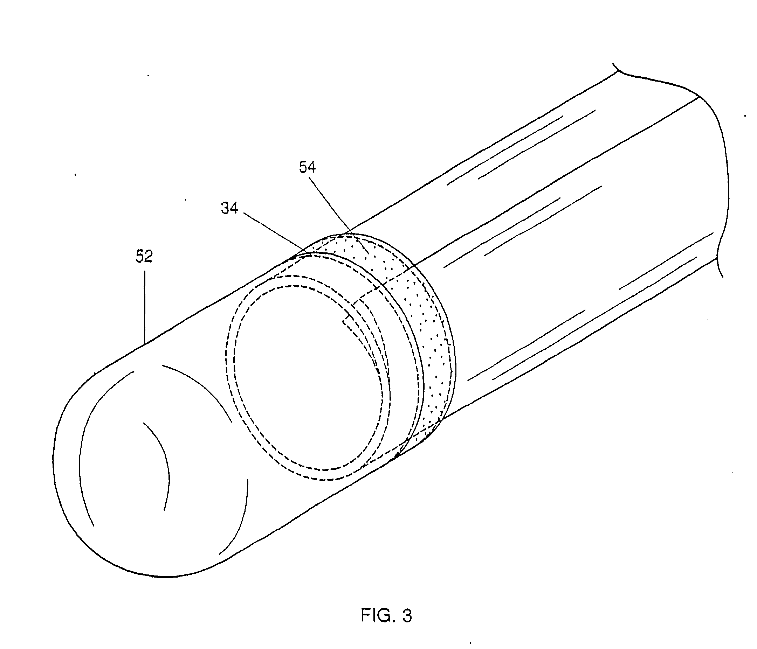

To enable protective cover 20 to be fitted and secured around a cable or hose, fasteners are provided along the opposed longitudinal edges 26, 28. As best seen in Figure 2, narrow strips of hook 32 and loop 36 fasteners are affixed to opposed edges 26 and 28. These fastening strips are designed to engage one another along the entire surface area of contact between the strips, and are commercially available and widely known under the tradename VELCRO®. In the preferred embodiment, hook strips 32 are affixed to both sides of the woven sheet. Likewise, loop strips 36 are affixed to separate narrow flaps 38a, 38b that are joined at a seam along edge 28. This doubles the fastening capability of single strips of hook and loop material. As shown in Figure 3, when protective cover 20 is fitted around a cable or hose, flaps 38a, 38b cover the strips 32 of hook material. Thus, the protective cover 20 may be fitted easily over an installed cable or hose without the need to disconnect or disassemble the cable or hose from its installed condition. Alternatively, and as those skilled in the art will appreciate, other types of fasteners or fastening material may substitute for VELCRO®. These include, but are not limited to adhesives, bands, snaps, buttons, zippers, etc.

Once protective cover 20 has been fitted over the cable or hose to be protected, the ends of the protective cover are further secured to the hose, cable, or accessories affixed thereto. Tabs 40 are formed at opposite ends 27, 29 of the elongated fabric sheet. Grommets 42 of brass or other materials having suitable strength or affixed to tabs 40. In this way, the user may choose to pass a cord, tie, chain or other length of material through each of the grommets 42 to further secure protective cover 20 to the ends of the hose or cable or to an attached structure.

As an accessory to protective cover 20, a separate protective hood 52 is provided. As shown in Figure 3, hood 52 is formed of the same material as cover 20 and is desirably formed from a single piece of material; however, it may be formed from multiple pieces that are sewn together along multiple seams. Hood 52 is intended to protect the exposed ends of cables or hoses when they are not in use to prevent damage to those exposed ends and to prevent infiltration by contaminants. Referring again to Figure 2, hood 52 may be secured to cover 20 with VELCRO® material in a manner similar to the fasteners described hereinabove. Hood strips 34 may be affixed to either or both ends of the elongated sheet. Likewise, a loop strip 54 may be affixed around the inside periphery of hood 52. Alternatively, hood 52 may be affixed by other means known in the art of simply formed to be snugly fitted over the exposed end with elastic bands or the like.

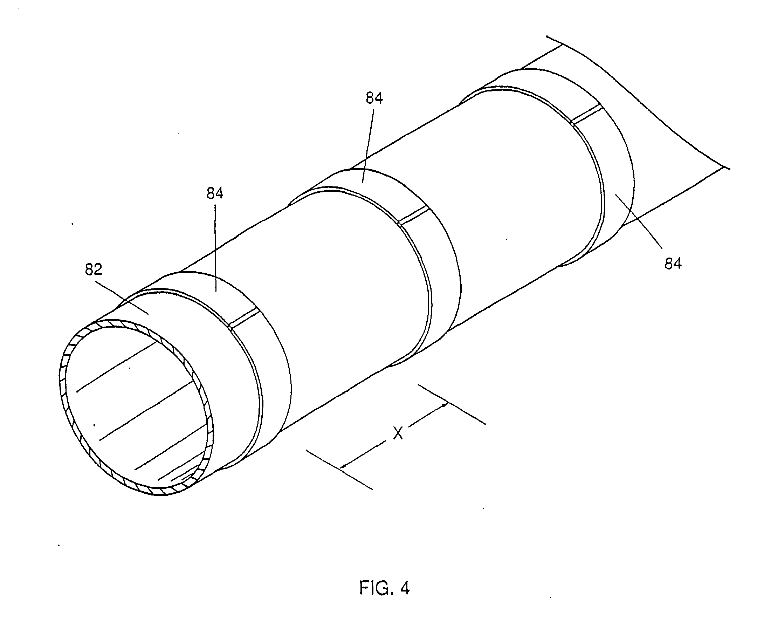

As shown in Figure 4, another aspect of the present invention is to provide protective coverlets 84, or bans, that may be wrapped around hoses or cables 82 at spaced-apart intervals. Such coverlets 84 would be most appropriate for applications where exposure to chemicals, weather, and ultraviolet radiation are not a concern. Depending upon the degree of protection against abrasion that is desired, the distance between coverlets, shown as 'X', may be shorter or longer. Coverlets 84 also offer the user the option of placing them at critical abrasion points based on wear history, etc. Coverlets 84 are formed in the same manner and from the same material as the elongated sheet in Figure 2.

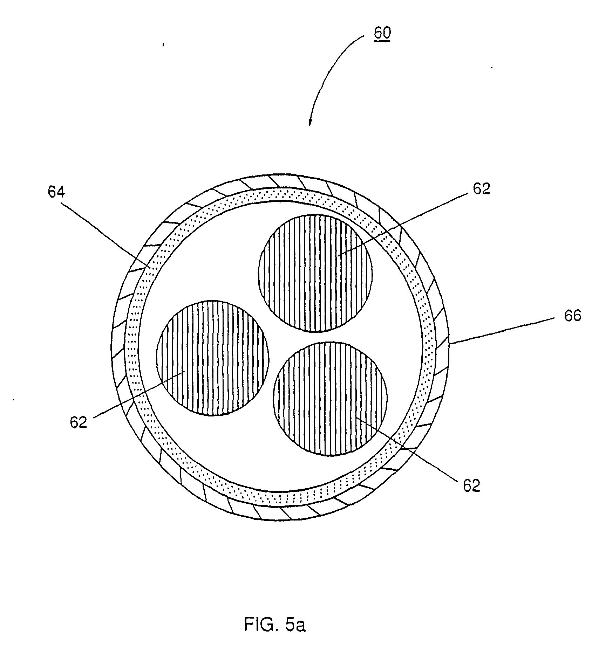

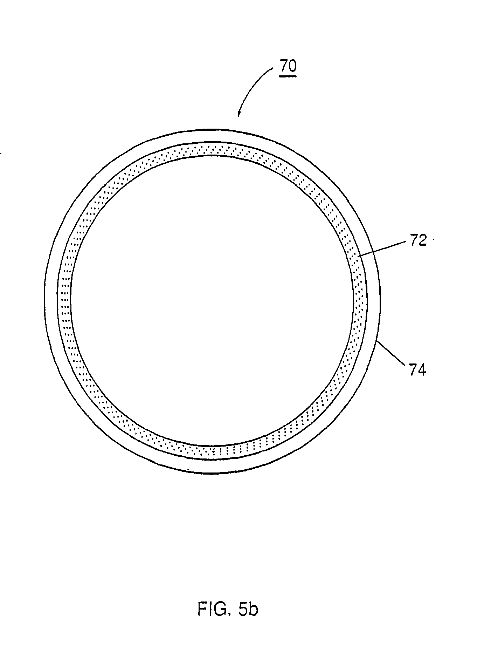

A further aspect of the present invention is to provide an abrasion-resistant electrical cable 60 or fuel hose 70, having a protective layer permanently affixed thereto. As shown in Figure 5A, at least one length of conductive material 62 such as copper or the like is encased by an insulating layer 64 such as rubber or insulating plastic. So formed, this is simply a conventional electrical cable well known in the art and widely used commercially without any further modifications thereof. However, for applications where such a cable is subjected to abrasive surfaces, the outer protective layer 66 formed from the woven fabric described hereinabove is permanently affixed to the intermediate insulating layer 64. The entire surface are of cable 60 is thus covered with the abrasion-resistant material. Outer layer 66 may be cemented or glued with commercial-grade adhesives known in the art. Alternatively, outer layer 66 may be pressed or impregnated into the outer surface of layer 64 using techniques well known to those in the art. Similarly, fuel hose 70 is formed from a substantially impermeable resilient material 72, such as rubber, resulting in a hollow core. The outer layer 74 of abrasion-resistant material may be affixed atop layer 72 in the same fashion that it is affixed to cable 60. Thus, in applications where users require more permanently formed abrasion-resistant cables or hose, those constructed according to the present invention provide the needed solution.

## Claims

1. An abrasion-resistant, cut-resistant, and tear-resistant protective cover (10) for cables or hoses (82) used in environments in which the cables and hoses are subjected to abrasion, chemicals, or weather extremes, said protective cover comprising a sleeve to surround said cable or hose, said sleeve having open ends (15, 17) and being formed of an elongated sheet of a woven polymeric material, **characterized in that** the sleeve is formed of a single layer, lightweight fabric made substantially of high performance yarns formed primarily of long chain polyethylene fibers having a tensile modulus equal to or greater than 1350 g/Tex (150 g/denier) and a tenacity equal to or greater than 63 g/Tex (7 g/denier), the yarns being of 44.4 to 111 Tex (400 to 1000 denier), said fabric having a warp and fill density of 11.8 to 14.2 ends/cm (30 to 36 ends per inch),and the sleeve having bonded to the outside thereof as thermoplastic film of polyethylene and/or ethylene-vinyl acetate copolymer and wherein said fabric is resistant to petroleum-based products.

2. The protective cover of Claim 1 wherein said fabric is formed from at least 70 percent high-performance yarns.

3. The protective cover of Claim 1 or claim 2 wherein said fabric has a weight of 169 to 271 g/m² (5 to 8 ounces per square yard).

4. The protective cover (20) of any preceding claim wherein said sleeve is formed as an elongated sheet having opposed longitudinal edges (26, 28), said opposed longitudinal edges including means releasably attaching said opposed longitudinal edges together around the length of said cable or hose.

5. The protective cover according to any one of claims 1 to 7 wherein said sleeve is formed as a plurality of bands (84), each band comprising a short length of said fabric, said bands being spaced apart along the length of a cable or hose (82).

6. The protective cover of claim 10 wherein each of said bands (84) is formed as a short length of fabric having opposed longitudinal edges, said opposed longitudinal edges including means for fastening said opposed longitudinal edges together around the length of said cable or hose.

7. The protective cover of claim 4 or claim 6 wherein said means for fastening said opposed longitudinal edges (26, 28) comprises hook and loop material (32, 36).

8. The protective cover of any preceding claim further including a hood (52) formed of the same fabric as said sleeve and fastened to at least one end of said sleeve for protecting an exposed end of said cable or hose.

9. An abrasion-resistant, cut-resistant, and tear resistant cable or hose system, comprising:
(a) a cable or hose that must be periodically moved or dragged across abrasive surfaces; and
(b) a protective sleeve according to any preceding claim.

10. The system of claim 9 further including means (54) for securing said open ends of the sleeve to said cable or hose.

## Patentansprüche

1. Abriebfeste, schnittfeste und reißfeste Schutzhülle (10) für Kabel und Schläuche (82), die in Umgebungen verwendet werden, in denen die Kabel und Schläuche Abrieb, Chemikalien oder extremen Wetterbedingungen ausgesetzt sind, wobei die Schutzhülle umfasst: eine Umhüllung zum Umgeben des Kabels oder Schlauchs, wobei die Umhüllung offene Enden (15, 17) hat und aus einer länglichen Bahn aus einem gewebten Polymermaterial besteht, **dadurch gekennzeichnet, dass** die Umhüllung aus einer einzigen Schicht eines leichten Gewebes ausgebildet ist, das im Wesentlichen aus Hochleistungsgarnen hergestellt ist, die hauptsächlich aus langkettigen Polyethylenfasern sind, die einen E-Modul Zug von größer oder gleich 1350 g/Tex (150 g/denier) und eine relative Reißfestigkeit von größer oder gleich 63 g/Tex (7 g/denier) haben, wobei die Garne 44,4 bis 111 Tex (400 bis 1000 denier) haben, wobei das Gewebe eine Kett- und Fülldichte von 11,8 bis 14,2 Fäden/cm (30 bis 36 Fäden pro Zoll) haben, und auf der Außenseite der Umhüllung eine thermoplastische Folie aus Polyethylen und/oder Ethylen-Vinyl-Azetat-Copolymer verklebt ist, und wobei das Gewebe gegen Mineralölprodukte widerstandsfähig ist.

2. Schutzhülle nach Anspruch 1, wobei das Gewebe aus mindestens 70 Prozent Hochleistungsgarnen ist.

3. Schutzhülle nach Anspruch 1 oder Anspruch 2, wobei das Gewebe ein Gewicht von 169 bis 271 g/m² (5 bis 8 Unzen pro Quadratyard) hat.

4. Schutzhülle (20) nach einem der vorhergehenden Ansprüche, wobei die Umhüllung aus einer länglichen Bahn mit sich gegenüber liegenden Längskanten (26, 28) ausgebildet ist, wobei die sich gegenüber liegenden Längskanten ein Mittel aufweisen, das die sich gegenüber liegenden Längskanten um die Länge des Kabels oder Schlauchs trennbar aneinander befestigt.

5. Schutzhülle (20) nach einem der Ansprüche 1 bis 7, wobei die Umhüllung aus einer Vielzahl von Bändern (84) ausgebildet ist, wobei jedes Band ein kurzes Stück des Gewebes umfasst, wobei die Bänder entlang der Länge eines Kabels oder Schlauchs (82) voneinander beabstandet sind.

6. Schutzhülle nach Anspruch 10, wobei jedes des Bänder (84) als ein kurzes Stück Gewebe ausgebildet ist, das sich gegenüber liegende Längskanten hat, wobei die sich gegenüber liegenden Längskanten ein Mittel zum Befestigen der sich gegenüber liegenden Längskanten aneinander um die Länge des Kabels oder Schlauchs aufweisen.

7. Schutzhülle nach Anspruch 4 oder Anspruch 6, wobei das Mittel zum Befestigen der sich gegenüber liegenden Längskanten (26, 28) ein Klettverschlussmaterial (32, 36) umfasst.

8. Schutzhülle nach einem der vorhergehenden Ansprüche, ferner aufweisend eine Haube (52), die aus dem selben Gewebe wie die Umhüllung ausgebildet ist und an mindestens einem Ende der Umhüllung befestigt ist, um ein freiliegendes Ende des Kabels oder Schlauchs zu schützen.

9. Abriebfestes, schnittfestes und reißfestes Kabel- oder Schlauchsystem, umfassend:
(a) ein Kabel oder einen Schlauch, die periodisch über abreibende Oberflächen bewegt oder gezogen werden müssen; und
(b) eine schützende Umhüllung nach einem der vorhergehenden Ansprüche.

10. System nach Anspruch 9, ferner aufweisend ein Mittel (54) zum Befestigen der offenen Enden der Umhüllung an dem Kabel oder Schlauch.

## Revendications

1. Revêtement de protection (10) résistante à l'abrasion, aux entailles et aux déchirures pour des câbles ou tuyaux (82) utilisées dans des environnements dans lesquels les câbles et tuyaux sont soumis à l'abrasion, aux substances chimiques ou aux conditions climatiques extrêmes, ledit revêtement de protection comprenant un manchon pour entourer ledit câble ou tuyau, ledit manchon ayant des extrémités ouvertes (15 ; 17) et étant formé avec une feuille allongée d'un matériau polymère tissé, **caractérisé en ce que** le manchon est formé avec un tissu léger à simple couche réalisé sensiblement avec des fils haute performance formés principalement de fibres de polyéthylène à longue chaîne ayant un module de tension égal ou supérieur à 1 350 g/Tex (150 grammes/denier), et une ténacité égale ou supérieure à 63 g/Tex (7 grammes/denier), les fils étant de 44,4 à 111 Tex (400 à 1 000 deniers), le tissu ayant une densité de chaîne et de remplissage de 11,8 à 14,2 bouts par pouce (30 et 36 bouts par pouce) et le manchon ayant un film thermoplastique de polyéthylène et/ou de copolymère d'acétate de vinyle-éthylène lié à sa surface externe, et dans lequel ledit tissu est résistant aux produits à base de pétrole.

2. Revêtement de protection selon la revendication 1, dans laquelle ledit tissu est formé à partir d'au moins 70 pourcent de fils haute performance.

3. Revêtement de protection selon la revendication 1, dans laquelle ledit tissu a un poids de 169 à 271 g/m² (5 et 8 onces par verge carré).

4. Revêtement de protection selon la revendication 1, dans laquelle ledit manchon est formé comme une feuille allongée ayant des bords longitudinaux opposés (26, 28), lesdits bords longitudinaux opposés comprenant des moyens pour fixer de manière amovible lesdits bords longitudinaux opposés ensemble autour de la longueur dudit câble ou tuyau.

5. Revêtement de protection selon l'une quelconque des revendications 1 à 4, dans laquelle ledit manchon est formé comme une pluralité de bandes (84), chaque bande comprenant une courte longueur dudit tissu, lesdites bandes étant espacées le long de la longueur d'un câble ou tuyau (82).

6. Revêtement de protection selon la revendication 5, dans laquelle chacune desdites bandes (84) est formée comme une courte longueur de tissu ayant des bords longitudinaux opposés, lesdits bords longitudinaux opposés comprenant des moyens pour fixer lesdits bords longitudinaux opposés ensemble autour de la longueur dudit câble ou tuyau.

7. Revêtement de protection selon la revendication 4 ou 6, dans laquelle lesdits moyens pour fixer lesdits bords longitudinaux opposés (26, 28) comprennent une bande velcro (32,36).

8. Revêtement de protection selon l'une quelconque des revendications précédentes, comprenant en outre une capuche (52) formée avec le même tissu que ledit manchon et fixée au moins à une extrémité dudit manchon pour protéger une extrémité exposée dudit câble ou tuyau.

9. Système de revêtement de protection résistante à l'abrasion, résistante aux entailles et résistante aux déchirures, comprenant :
(a) un câble ou tuyau qui doit être déplacée ou tirée périodiquement sur des surfaces abrasives ;
(b) un manchon de protection selon l'une quelconque des revendications précédentes.

10. Système selon la revendication 9, comprenant en outre des moyens (54) pour fixer lesdites extrémités ouvertes du manchon audit câble ou tuyau.
